# EUROPEAN PATENT APPLICATION

(11) **EP 1 321 388 A1**
(43) Date of publication of application: **25.06.2003**
(21) Application number: 02027250.6
(22) Date of filing: 06.12.2002
(51) Int. Cl.: B65G 15/10

(54) **Curved path conveying device for transporting flat-based articles**

(30) Priority: 21.12.2001 IT BG20010047
(71) Applicant: MICROMEC S.N.C. DI MARCHESI & C., 24061 Albano S. Alessandro (Bergamo) (IT)
(72) Inventor: Madaschi, Carlo, 24061 Albano S. Alessandro (Bergam) (IT)
(74) Representative: Luksch, Giorgio, Dr.-Ing.

(57) **Abstract**

A motorized curve for flat transport lines for flat-based articles, particularly books, characterized by presenting a support surface for the transported articles which consists of the summits of belts (16) of round section projecting from transverse retention grooves (18) of arcuate extension present in the upper surface of a large flat plate.

## Description

This invention relates to a motorized curve for flat transport lines for flat-based articles, particularly books.

In modern establishments it is known to produce articles (in the widest sense) by the action of a plurality of working machines or stations located in different zones. This involves transferring such articles from one station to the next. The most suitable means for achieving this transfer is in the form of conveyor belts or roller tables. When said transfer takes place along a straight line it is particularly efficient and simple to achieve. When however tortuous paths have to be passed through, such paths are obtained by combining straight portions with curved portions of circular arc type. These curved portions are known generally as "curves" and have an extension variable from 45 to 300°. Said curves of the known art are formed in various ways. One of these comprises a plurality of adjacent rollers with their axes disposed radially about a common center. This method has the drawback of presenting a discontinuous slide surface which, in particular cases, could create problems. One of these particular cases is the transport of books or piles of books. Along the curved portion the books, or the pile of books, is subjected to a centrifugal force; in this respect, when combined with the slipperiness of the covers, and/or with even minimum further stresses, this can create irregularities in the shape of the pile, and hinder subsequent actions by downstream machines. The speed of the moving support surface is also irregular, causing the articles to slip on their base; this determines movement trajectories which are not rigorously predetermined.

Another method for obtaining these curves is to use a wide conical belt flattened by two end deviation rollers; this "conical belt" method presents however technical drawbacks which impose complicated, delicate and particularly costly construction.

An object of the present invention is to define a motorized curve for flat lines which offers the transported articles a continuity of support. Another object is to define a curve, as aforestated, which can offer peripheral speeds comparable to those of a rotating disc. Another object is to define a curve, as aforestated, able to offer a long operating life. Another object is to define a curve, as aforestated, which can be constructed at low cost. These and further objects will be seen to have been attained on reading the following detailed description of a motorized curve for flat transport lines for flat-based articles, particularly books, characterized by presenting a support surface for the transported articles which consists of the summits of belts of round cross-section projecting from transverse retention grooves of arcuate extension present in the upper surface of a large flat plate.

The invention is illustrated by way of non-limiting example in the accompanying drawings, in which:
Figure 1 is a view of a motorized curve seen from above;
Figure 2 shows the curve of Figure 1 seen from a perpendicular position;
Figure 3 shows a detail of Figure 2;
Figure 4 shows the curve of the preceding figures, seen from below;
Figure 5 is a section through Figure 1;
Figure 6 is a section through Figure 2;
Figure 7 is a further section through Figure 2;
Figure 8 is a further section through Figure 2, perpendicular to those of Figures 6 and 7;
Figure 9 shows a detail of Figure 4;
Figure 10 is a section through a guided slide groove for the round-section belts;
Figure 11 shows a detail of Figure 5;

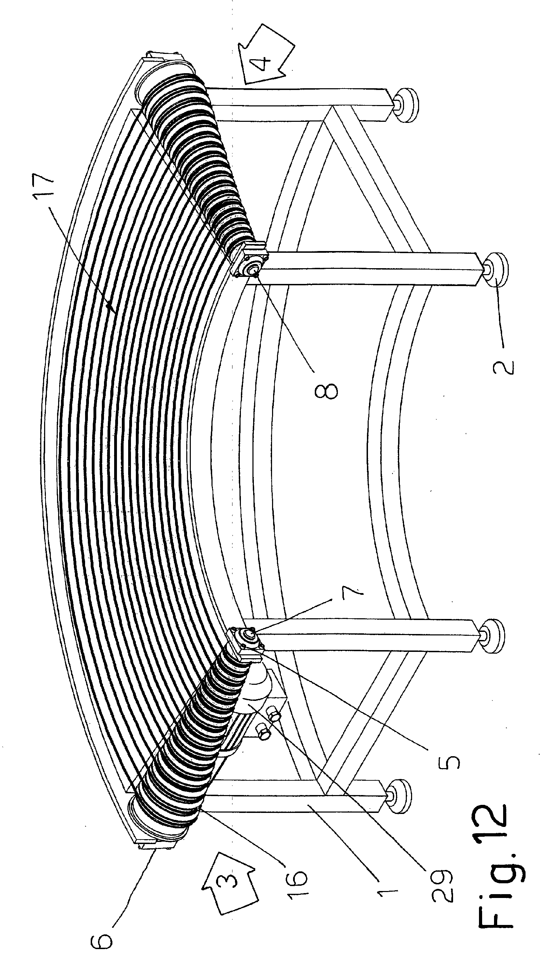

Figure 12 is a perspective view of the curve of the preceding figures seen from above.

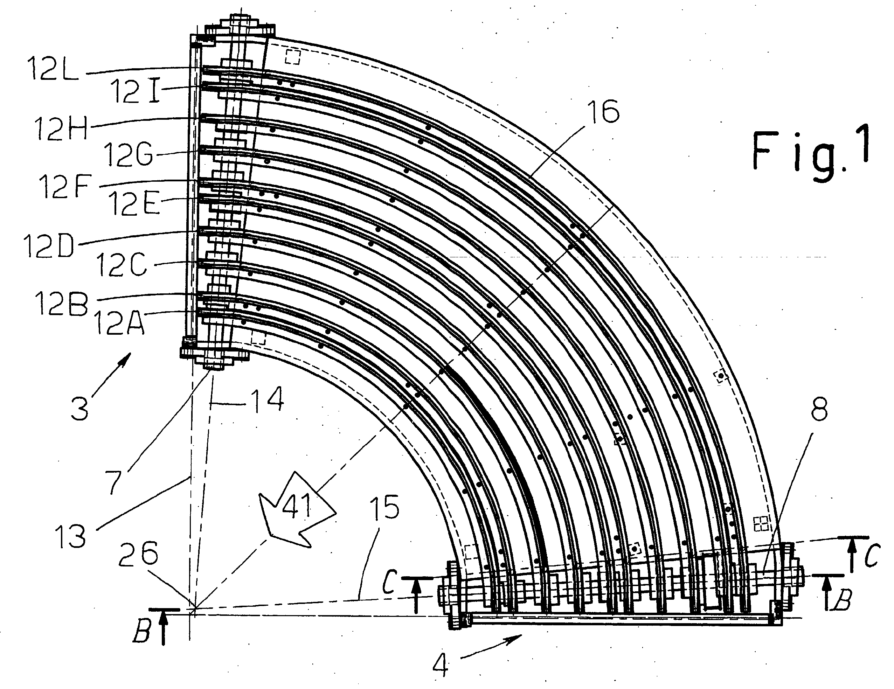

With reference to the aforesaid figures, a base frame 1 rests on the floor via usual adjustable feet 2. Said frame has a plan shape in the form of a quarter of a circular ring, as deducible from Figure 1.

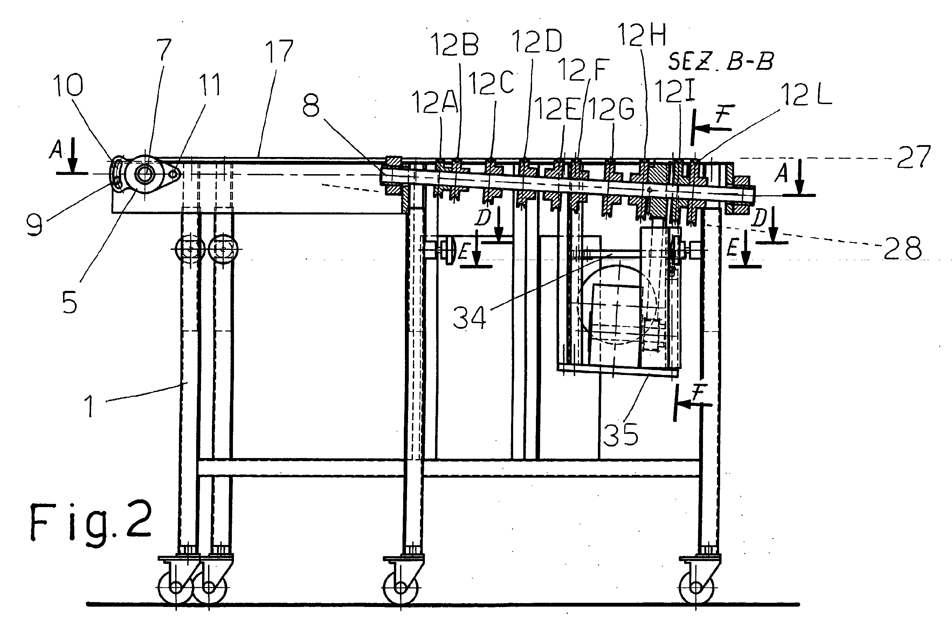

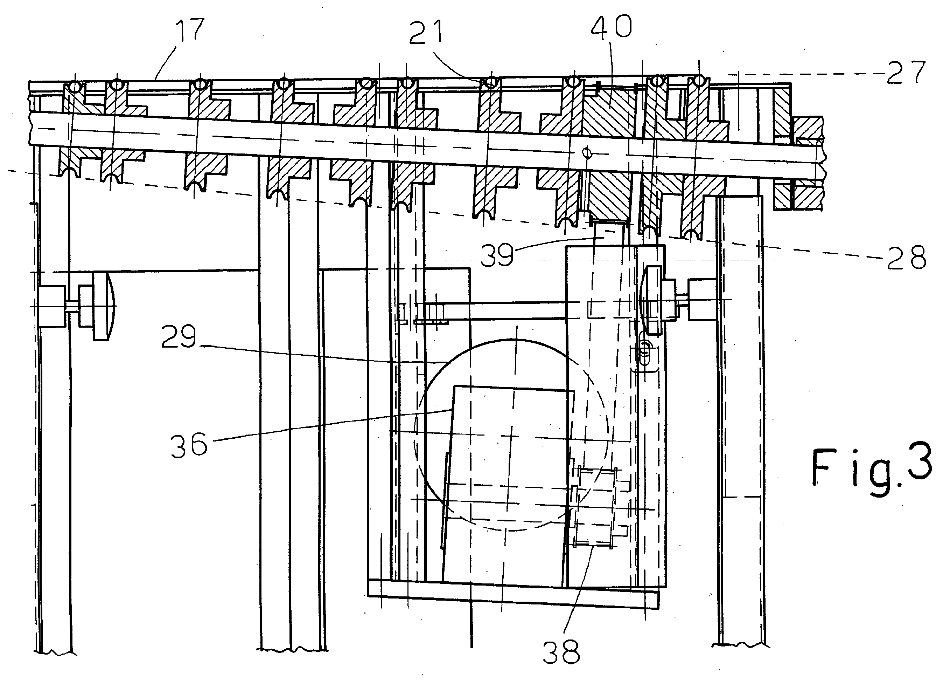

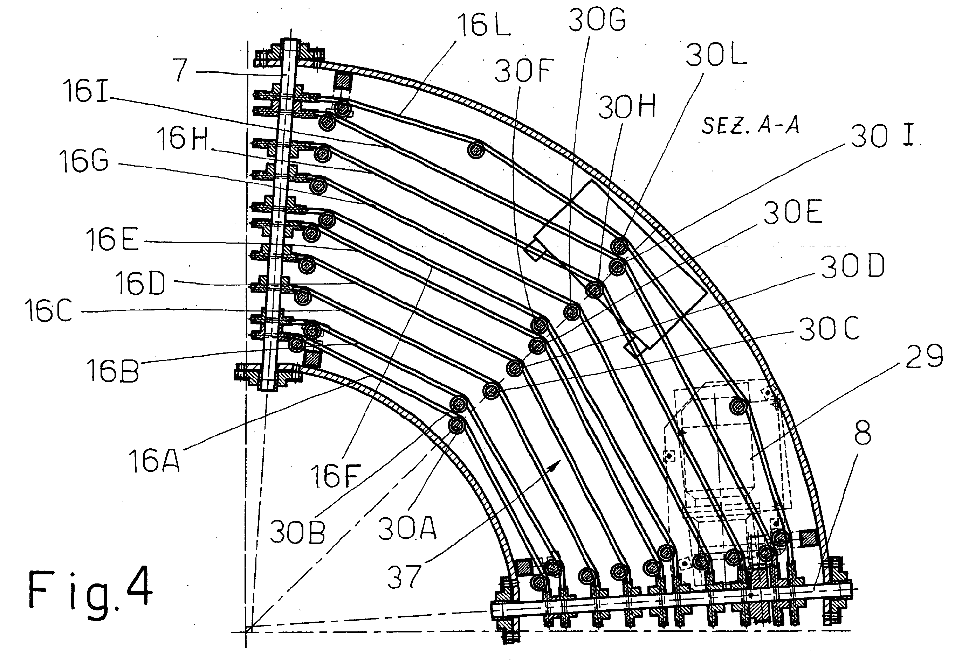

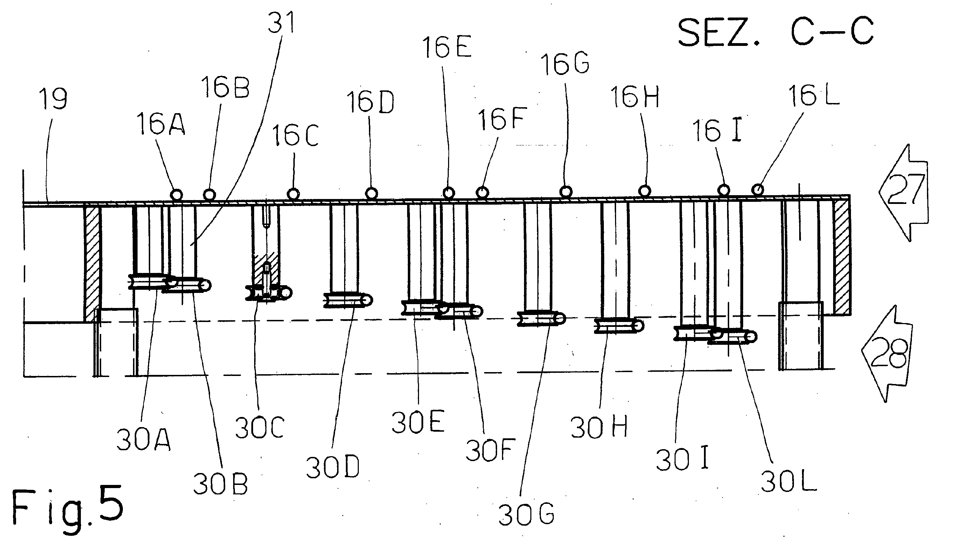

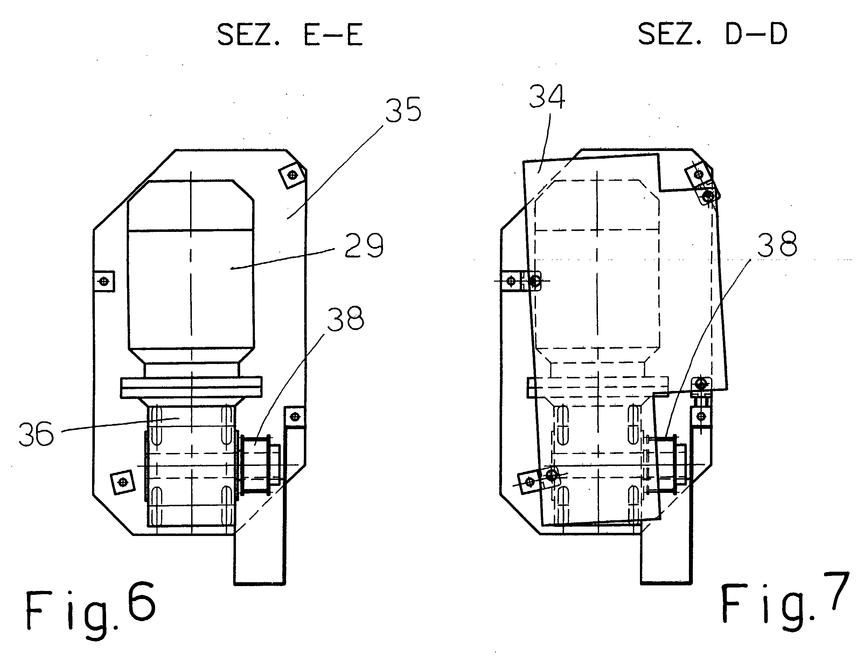

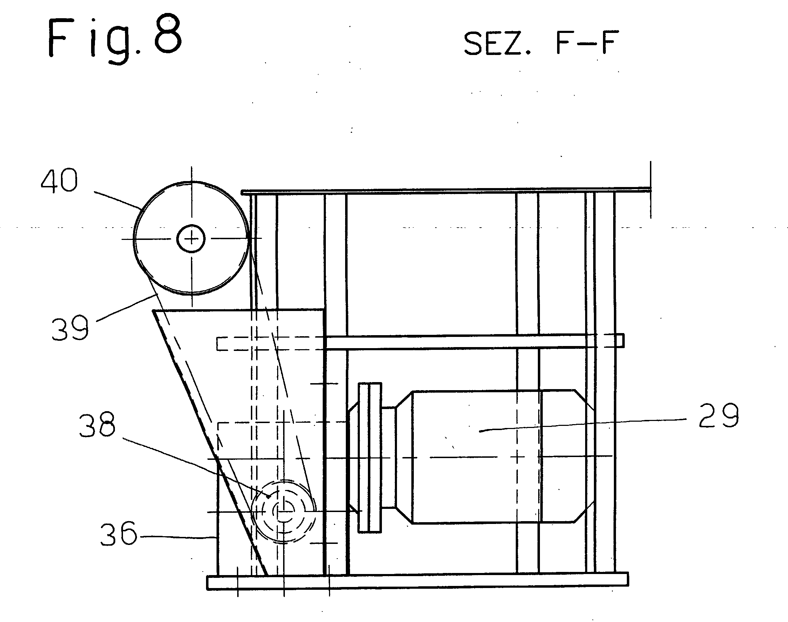

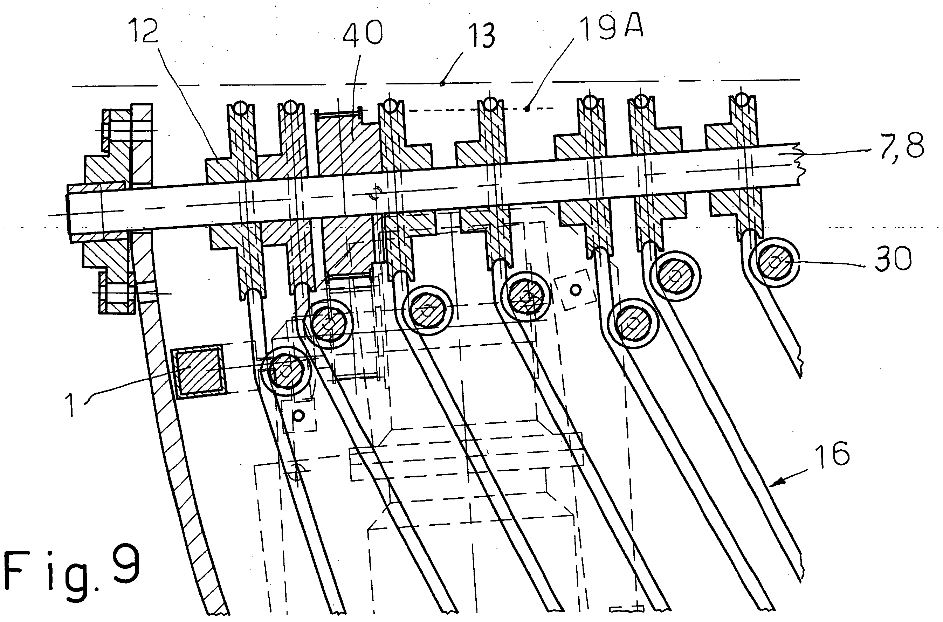

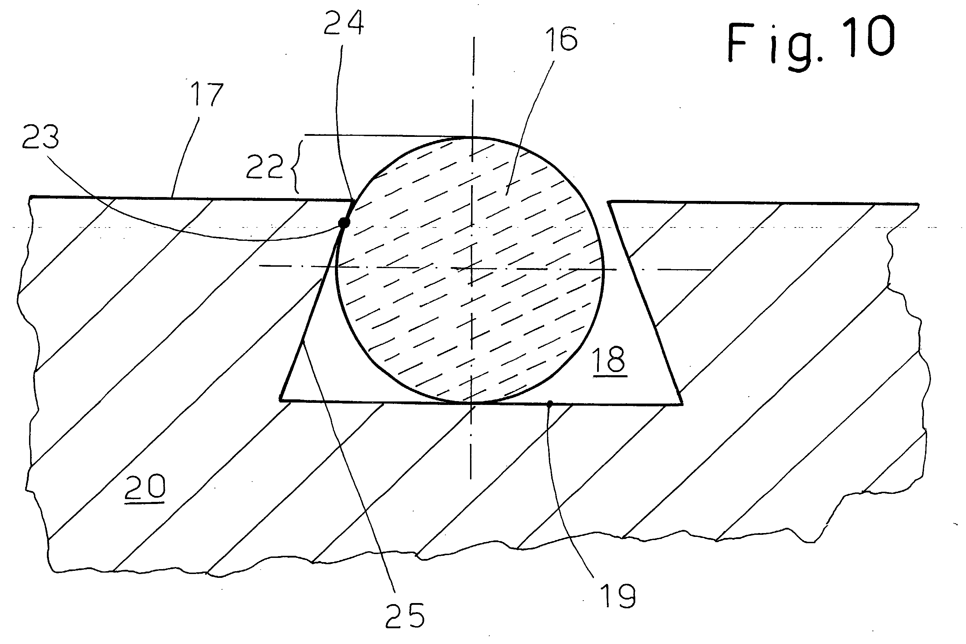

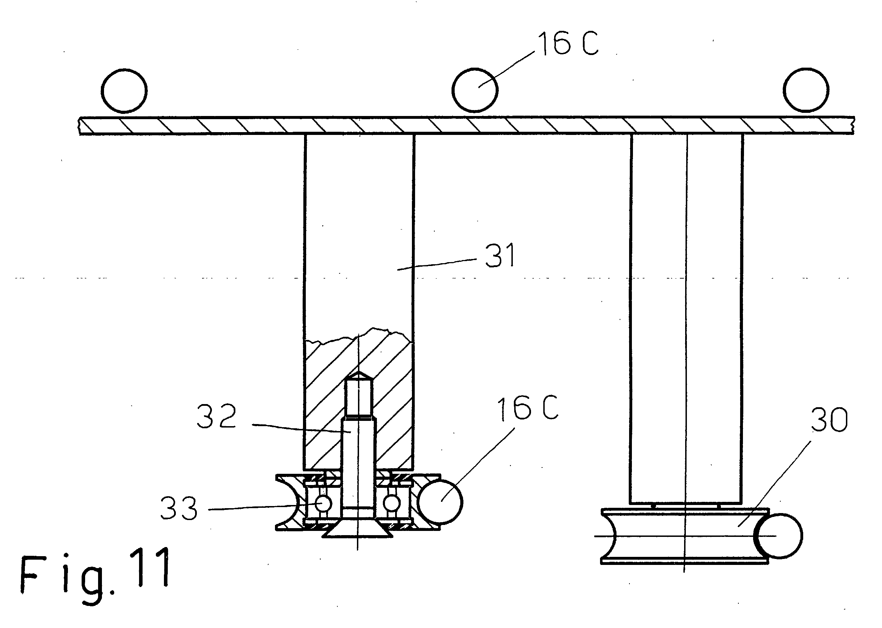

Its terminal sides 3, 4 are therefore perpendicular to each other and radial. This perpendicularity reflects the mutual inclination of the transport lines connected together by this curve. The curve could however be suitable for any angular value. On each of said two terminal sides, in the upper part of the frame, there are present an internal support 5 and an external support 6, provided for supporting respectively a first shaft 7 and a second shaft 8. Of these supports, the external support 6 is provided with a spherical seat which enables the shaft 7 to slightly vary its inclination a result of the position assumed by the internal support 5. The internal support 5, also comprising a spherical (i.e. orientable) rolling seat, is of the type which swivels about a pivot bolt 11 and can be locked by a second bolt 9 operating within a slot 10. This solution is simply indicative of the fact that the two shafts 7 and 8 can be disposed at slightly variable inclinations and heights. For this purpose their supports can be variously slotted to obtain said "operative set-up" variations. In this respect a plurality of round-grooved pulleys 12, indicated specifically by 12A, 12B, 12C, 12D, 12E, 12F, 12G, 12H, 121, 12L, are keyed onto these shafts. These pulleys are disposed along their own shaft 7 or 8, in positions such that their periphery is aligned along a generator 13 defining the terminal sides 3 and 4. The first shaft 7 has an axis 14 and the second shaft 8 an axis 15. The pulleys 12 present on the first shaft 7 and on the second shaft 8 perform a deviation function for their own round-section belt 16 which "emerges" from them along a horizontal plane 17 generically expressive of the theoretical plane of curved transport. This plane 17 approximately coincides with the upper surface of a ample plate 20. The round belt has a diameter of approximately eight millimeters, representing a design compromise considering the self-heating of the belt to be proportional to its diameter. To more exactly understand the location of the round-section belts 16 with respect to said generic transport plane, Figure 10 should be considered. This figure shows that the belt 16 rests on the base 19 of a trapezoidal groove 18 present in the ample plate 20 and having its sides inclined by about 20°. The level of said base 19 of the groove exactly constitutes a theoretical plane 19A (Figure 9) tangential to the base of the semicircular groove 21 in the pulleys 12 at their highest point. The trapezoidal grooves 18 have a depth less than the diameter of the circular cross-section through the belt, so that said belt can offer a projection 22 from the theoretical transport plane 17. This belt projection 22 has a value which is about one half the radius of the cross-section through the belt. In this manner there exists between the inclination of the sides of the trapezoidal groove and the circular cross-section through the belt, a point (or zone) of contact 23 which lies on the upper semicircumference that cross-section. The location of said zone 23 must be such that the entire zone in which the roundness of the cross-section through the belt has been flattened by operating stresses, remains entirely contained below the theoretical plane 17 coinciding with the upper surface of the ample plate 20. This is to prevent contact between the belt 16 and the sharp edge 24. As can be seen in Figure 10, the belt 16 is in contact with only one of the two oblique sides of the trapezoidal groove, namely with the more inner side 25, i.e. that closer to the center 26 of the transport curve. This contact within the zone 23 is created by the tension in the respective belt 16. This tension is that required by any belt to create, at the base of its own drive pulley, the friction necessary to transmit movement. As in the case of all tensions, this tends to straighten the curves and consequently tends to have a centripetal direction of action 41. From the aforestated, it is apparent that the trapezoidal form of the groove 18 is not indispensable; in this respect the inclination of the inner side 25 could derive from an inclined rectangular section, which can also be produced by milling. It should at this point be noted that the trapezoidal grooves 18 have a trajectory in the form of circular arcs concentric at the center 26. Hence an ample plate 20 is provided in the shape of a quarter of a circular ring, and is traversed by concentric trapezoidal grooves, from which the projections 22 of the round-section belts 16 emerge. As these belts are close together, they prevent any articles having a suitably large flat base from touching the surface 17, which is at rest, and consequently offer these articles an exclusive support which enables them to be advanced together with the said belts 16. The belt 16 is driven by the drive pulleys 12 keyed onto the second drive shaft 8; a plurality of similar pulleys 12 are driven by and keyed onto the first drive shaft 7. The path of these belts 16 is however different between an upper level 27 intended for the support and transport of the articles, and a lower level 28 along which the belts simply return. The upper path is in the form of a plurality of concentric circular arcs, as shown in Figure 1. Instead, the lower path is in the from of polygonal patterns, as shown in Figure 4. In said Figures 1 and 4 the belts 16 are indicated by a specific alphabetical letter which enables the respective complete paths for each of them to be seen. As can be seen from the sectional view of Figure 2, at the lower level 28 the various belts are disposed at different levels; this level difference necessitates different round-groove pulleys 30 for their angular deviation, namely 30A, 30B, 30C, 30D, 30E, 30F, 30G, 30H, 30l, 30L, giving them the same alphabetical letters as their own belts. This is clearly apparent in the section C-C of Figure 5, in which each pulley is shown with its own vertical column support 31. A constructional detail of these lower supports is shown in Figure 11, in which it can be seen that each pulley 30 rotates on its own pin 32 supporting a ball bearing 33. With reference to said ample plate 20, this is provided with arcuate grooves of trapezoidal cross-section, with inclined sides to provide selfretention for the belts 16 within them. Such geometry means that the belts 16 slide along the inner wall 25 and along the base 19 of the trapezoidal groove 18, with a force which is proportional to their tension. This creates grazing friction which must be reduced to a minimum, by using suitable materials. Materials which properly perform this function are polyurethane for the round-section belts 16, and very high density polyethylene for the ample plate 20. More precisely, the belts are formed of extruded polyurethane of "83A DURO" type marketed by the BERG Company. The ample plate 20 is instead formed of very high density polyethylene with a very high degree of polymerization, of the type known by the commercial name of POLYZENE 1000; its molecular weight, measured by the viscosimeter system, has a value of the order of 1 million. This does not exclude the use of other anti-friction materials such as nylon, delrin or teflon, which are of higher cost but could be compatible with belts of a different material from the said polyurethane. Alternatively, said ample plate 20 could be constructed of a usual aluminum alloy treated with anodic oxidation, or clad with PTFE on the constituent surfaces of the retention grooves 18. Figures 6, 7 and 8 give useful information regarding the arrangement of an electric motor 29 and an angular speed reduction gear 36 coupled to it. Specifically, it can be seen that the motor-reduction gear unit 29-36 rests on an inclined plate 35 and is overlaid by a plate 34. The plate 34 provides thermal protection for the overlying belts 16. In this respect, said belts 16 are subject to induced elongation proportional to their operating temperature. For this reason they present lengthy free portions 37 which are defined by the distance between two deviation pulleys 30 and are exposed to the air to receive maximum cooling therefrom. As the belts 16 are subjected to heat produced by their external rubbing and by the internal molecular friction (or hysteresis), they are preferably not also subjected to heating by the convective movements generated by the heat of the electric motor and speed reduction gear. This result is obtained precisely by interposing the protective plate 34 which, by distributing the heat source over a large area, achieves a lowering of the radiation temperature. With reference to Figures 2, 3, 4, 6, 7, 8, 9, it can be seen that power is transmitted from the electric motor 29 to the round-section belts 16 by way of the reduction gear 36. In this respect, a lower toothed drive pulley 38 is keyed onto this reduction gear to transmit motion to an upper toothed driven pulley 40 by means of a toothed belt 39.

## Claims

1. A motorized curve for flat transport lines for flat-based articles, particularly books, **characterized by** presenting a support surface for the transported articles which consists of the summits of belts (16) of round section projecting from transverse retention grooves (18) of arcuate extension present in the upper surface of a large flat plate (20).

2. A motorized curve as claimed in the preceding claim, **characterized in that** the round-section belts (16) pass about specific end deviation pulleys (12) keyed onto mutually converging shafts (7, 8) and having their upper-level branches (27) and lower-level branches (28) stabilized respectively by the arcuate path of the transverse retention grooves (18) and by the positioning of deviation pulleys (30) of vertical axes at the vertices of a polygonal line which essentially reproduces the path of the same specific belt (16) at the upper level.

3. A motorized curve as claimed in the preceding claims, **characterized in that** the transverse retention grooves (18) have that side of their cross-section towards the interior of the curve (25) inclined in such a manner as to generate downward components on the belt which facilitate its retention within its slide groove.

4. A motorized curve as claimed in the preceding claim, **characterized in that** the transverse retention grooves (18) have a trapezoidal cross-section.

5. A motorized curve as claimed in the preceding claims, **characterized in that** the transverse retention grooves (18) have a rectangular cross-section.

6. A motorized curve as claimed in the preceding claims, **characterized in that** the transverse retention grooves (18) have an inclined rectangular cross-section.

7. A motorized curve as claimed in the preceding claims, **characterized in that** the point of contact (23) between the circular cross-section of the round belt (16) and the inner side (25) of the guide grooves (18) lies below a sharp edge (24), said point being understood as a zone flattened by the sliding contact deformation between the two parts.

8. A motorized curve as claimed in the preceding claims, **characterized in that** the deviation pulleys (12) at the two ends (3, 4) are keyed onto respective shafts (7, 8) with their axes intersecting at a center (26) which is also common to a generator (13) tangential to all the progressive diameters of the pulleys (12).

9. A motorized curve as claimed in the preceding claims, **characterized in that** at least one of the two pulley support shafts (7, 8) has its level raisable to adjust to an optimum value the projection of the belts (16) from the upper surface (17) of the ample plate (20) containing the retention grooves (18).

10. A motorized curve as claimed in the preceding claims, **characterized in that** the round-section belts (16) obtain their movement from the rotation of one of the two drive shafts (7, 8) supporting the pulleys (12) via a toothed belt (39) transmitting power from an electric motor (29) assisted by a reduction gear (36) and disposed with its axis inclined, parallel to an overlying shaft (7, 8) supporting the pulleys (12).

11. A motorized curve as claimed in the preceding claims, **characterized in that** the motor-reduction gear unit (29-36) is overlaid by a plate (34) provided to thermally isolate the overlying round-section belts (16).

12. A motorized curve as claimed in the preceding claims, **characterized by** using round-section belts of polyurethane.

13. A motorized curve as claimed in the preceding claims, **characterized in that** the guide and retention grooves (18) for the belts have their surface formed of anti-friction material.

14. A motorized curve as claimed in the preceding claims, **characterized in that** the ample plate (20) is constructed substantially of aluminum, to offer high thermal dissipation of the heat generated by the friction to which the round-section belts (16) are subjected.

15. A motorized curve as claimed in the preceding claims, **characterized in that** the grooves (18) present in the large aluminum plate (20) are clad by anodic oxidation.

16. A motorized curve as claimed in the preceding claims, **characterized in that** the grooves (18) present in the large aluminum plate (20) are clad with P.T.F.E.

17. A motorized curve as claimed in the preceding claims, **characterized in that** the ample plate (20) is constructed of very high density polyethylene.
